# EUROPÄISCHE PATENTANMELDUNG

(11) **EP 3 053 992 A1**
(43) Veröffentlichungstag der Anmeldung: **10.08.2016**
(21) Anmeldenummer: 15154251.1
(22) Anmeldetag: 09.02.2015
(51) Int. Cl.: C10L 1/02, C10L 1/182

(54) **Biodiesel**

(71) Anmelder: LANXESS Deutschland GmbH, 50569 Köln (DE)
(72) Erfinder: Harder, Joachim, 50674 Köln (DE); Soddermann, Matthias, 6467 Schattdorf (CH); Ingendoh, Axel, 51519 Odenthal (DE)

(57) **Zusammenfassung**

Die vorliegende Erfindung betrifft einen Biodiesel mit erhöhter Oxidationsstabilität umfassend Carbodiimide und Antioxidationsmittel wie insbesondere phenolische Antioxidationsmittel.

## Beschreibung

Die vorliegende Erfindung betrifft Biodiesel mit erhöhter Oxidationsstabilität.

Biodiesel wird als Ersatz für oder Zusatz zu mineralischem Dieselkraftstoff verwendet. Gewonnen wird Biodiesel typischerweise durch Umesterung von Ölen natürlichen Ursprungs, wie beispielsweise Rapsöl, Sojaöl, Sonnenblumenöl oder Altspeiseölen, sowie Fetten, wie beispielsweise Tierfetten oder Altspeisefetten, mit einem Alkohol, üblicherweise Methanol. Um Biodiesel über einen längeren Zeitraum verwenden und lagern zu können, muss die Stabilität gewährleistet sein. Die ungesättigten Kohlenwasserstoffketten in Biodiesel können in Gegenwart von Luftsauerstoff und/oder Feuchtigkeit zu einem autooxidativen Abbau führen. Dabei entstehen als Oxidationsprodukte Wasser und saure Spaltprodukte, welche den Fortschritt der Alterung durch Hydrolyse, das heißt die Spaltung der Ester in Säure und Alkohol, weiter beschleunigen.

Gealterter Biodiesel zeigt nicht nur eine für den Endverbraucher unattraktive Verfärbung und eventuelle Ausfällung, die zu Ablagerungen auf den Dieselmotorbauteilen, auch bekannt als clogging, führen, sondern verhält sich, aufgrund der sauren Spaltprodukte, chemisch aggressiv gegenüber Elastomeren, metallischen Werkstoffen und Thermoplasten. Dies führt zum unerwünschten Abbau der Elastomere, Korrosion metallischer Werkstoffe oder Versprödung der Thermoplasten und erfordert technisch sehr aufwendige und kostspielige Lösungen.

Aus dem Stand der Technik sind lagerungsstabile, kohlenwasserstoffhaltige Mischungen und Verfahren zur Stabilisierung von kohlenwasserstoffhaltigen Mischungen, insbesondere Estergruppen enthaltenden Mischungen wie Biodiesel bekannt. Die Stabilität lässt sich mit der Rancimat-Zeit quantifizieren die nach dem in den Beispielen erläuterten Rancimat-Test nach DIN EN 14112 bestimmt wird.

Weitere Merkmale für die Stabilität von Biodiesel sind die Säurezahl und der MethanolGehalt.

Beispielsweise beschreibt WO 2008/144097 A1 eine Mischung aus Aminen, beispielsweise quaternären Ammoniumhydroxiden und quaternären Ammoniumalkoxiden, die mit freien Carbonsäuren in Biodiesel reagieren und die Säurezahl dieses Biodiesels reduzieren, ohne mit dem Biodiesel selbst zu interagieren.

EP 0705898 A1 beschreibt Estergruppen enthaltende Schmierstoff-Grundsubstanzen mit erhöhter Oxidationsstabilität, die 0,05 bis 5 Gew.-% Carbodiimid enthalten.

In EP 1 563 041 A wird ein Verfahren zur Erhöhung der Oxidationsstabilität von Biodiesel beschrieben, bei dem man eine flüssige Stammlösung enthaltend Mono- oder Dialkylhydroxytoluol in Biodiesel gelöst, zum zu stabilisierenden Biodiesel bis zu einer Konzentration von 0,005 bis 2 Gew.-% zudosiert.

In EP 2 007 859 A1 wird ein Verfahren zur Erhöhung der Oxidationsstabilität beschrieben, das sich dadurch auszeichnet, dass zumindest eine Verbindung aus der Gruppe der Phenyldiamine zu dem zu stabilisierenden Biodiesel in einer Menge von 5 bis 20.000 ppm (w/w) zugegeben wird. Durch Zugabe von 1.500 ppm 2,6-Di-tert-butylhydroxytoluol (BHT) zu Biodiesel wurde eine Rancimatzeit von 7,4 Stunden erzielt. Durch die Zugabe von 1.500 ppm N-(1,3-Dimethylbutyl)-N'-phenyl-p-phenylendiamin zu Biodiesel wurde eine Rancimatzeit von 31,6 Stunden erzielt.

WO 2008/124390 A2 beschreibt eine Kraftstoffzusammensetzung enthaltend einen (C₁-C₄)-Alkylfettsäureester, ein stickstoffhaltiges Detergens, beispielsweise Polyisobutenyl-Succinimid und ein phenolisches Antioxidans, beispielsweise 2,6-Di-tert-butylhydroxytoluol, als Radikalfänger. Durch Zugabe von 300 ppm 2,6-Di-tert-butylphenol und 100 ppm Polyisobutenyl-Succinimid zu Rapsmethylester wurde eine Rancimat-Zeit von 12,9 Stunden erzielt.

Die stabilisierende Wirkung der im oben genannten Stand der Technik beschriebenen Substanzen oder Mischungen ist jedoch nicht immer ausreichend.

Demgemäß lag eine Aufgabe der vorliegenden Erfindung darin, Biodiesel mit einem noch effizienteren Stabilisatorsystem bereitzustellen.

Die Lösung der Aufgabe und Gegenstand der vorliegenden Erfindung ist nun Biodiesel enthaltend
(A) zumindest eine Verbindung ausgewählt aus Verbindungen der Formeln (I) und (II), 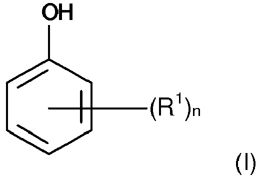 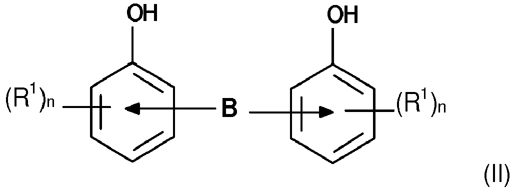 in denen n jeweils die Werte 1, 2, 3, 4 oder 5 einnehmen kann und die Reste R¹ jeweils unabhängig voneinander und von n stehen können für:
   (C₁-C₁₈)-Alkyl, (C₂-C₁₈)-Alkenyl, (C₂-C₁₈)-Alkinyl, (C₆-C₁₀)-Aryl, (C₃-C₁₀)-Heteroaryl, (C₆-C₂₄)-Alkylaryl, Halogen, wie insbesondere Chlor, -NO₂, (C₁-C₁₈)-Alkoxy, -CHO, -CN,-COOR², -CON(R²)₂, H₂N-NH(R²), oder -N(R²)₂ wobei R² in den vorgenannten Formeln jeweils unabhängig für Wasserstoff oder (C₁-C₁₈)-Alkyl stehen kann und
   in Formel (II)
   B für eine direkte Bindung zwischen den Aryl-Kernen oder eine die Aryl-Kerne verknüpfende (C₁-C₆)Alkylen-Gruppe steht, und
(B) zumindest ein Carbodiimid.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche bzw. Verfahrensparameter umfasst.

Unter Biodiesel werden im Sinne dieser Erfindung alle als Kraftstoff einsetzbaren gesättigten und ungesättigten Carbonsäurealkylester, insbesondere Carbonsäuremethylester oder Carbonsäureethylester, verstanden, wie sie üblicherweise unter dem Begriff Biodiesel beispielsweise in Automobilen, Lastkraftwagen, Schiffen oder Flugzeugen eingesetzt werden. Erfindungsgemäßer Biodiesel enthält zumindest 90 Gew.-%, vorzugsweise zumindest 96,5 Gew.-% (C₁-C₈)-Alkylester von (C₈-C₂₄)-Carbonsäuren, besonders bevorzugt (C₈-C₂₄)-Carbonsäuremethylester oder (C₈-C₂₄)-Carbonsäureethylester, die einfach bis sechsfach ungesättigt, bevorzugt einfach, zweifach oder dreifach ungesättigt sein können, wobei die (C₈-C₂₄)-Carbonsäurealkylester jeweils einzeln oder auch als Gemisch vorliegen können. Besonders bevorzugt sind genormte Biodiesel gemäß der DIN EN 14214 (FAME- und RME-Qualität) mit einem Ester-Gehalt von mindestens 96,5 Gew.-%, einem Wassergehalt von maximal 500 mg/kg, einer Oxidationsstabilität von mindestens 6 Stunden bezogen auf die Rancimatzeit, einer Säurezahl von maximal 0,5 mg/Kaliumhydroxid/g und einem Methanolgehalt von maximal 0,2 Gew.-%.

Erfindungsgemäßer Biodiesel kann darüber hinaus alle üblichen Zusatzstoffe, wie beispielsweise Antioxidantien, Entschäumer, Kältefließverbesserer oder Substanzen zur Erhöhung der Winterstabilität enthalten. Vorzugsweise enthält erfindungsgemäßer Biodiesel (C₈-C₂₄)-Carbonsäurealkylester, die aus pflanzlichen oder tierischen Ölen oder Fetten durch ein Umesterungsverfahren mit einem Alkohol, bevorzugt Methanol oder Ethanol, besonders bevorzugt Methanol, hergestellt wurden. Bevorzugt enthält erfindungsgemäßer Biodiesel (C₈-C₂₄)-Carbonsäurealkylester, die durch Umesterung von Rapsöl, Sojaöl, Sonnenblumenöl, Palmöl, Palmkernöl, Kokosöl, Jatrophaöl, Baumwollkernöl, Erdnusskernöl, Maiskernöl und/oder Altspeiseölen gewonnen wurden. Besonders bevorzugt ist jedoch Biodiesel enthaltend (C₈-C₂₄)-Carbonsäurealkylester, die durch Umesterung von Rapsöl, Palmöl, Sonnenblumenöl oder Sojaöl gewonnen wurden.

Verbindungen der Formel (I) und (II) sind in der Lage radikalische Abbaureaktionen durch Kettenabbruchreaktionen als Radikalfänger zu stoppen. Erfindungsgemäß wird als Komponente (A) zumindest eine Verbindung, ausgewählt aus Verbindungen der Formeln (I) oder (II) eingesetzt.

Bei bevorzugten Verbindungen der Formel (I) nimmt n die Werte 1, 2 oder 3 an.

R¹ befindet sich im Falle von Verbindungen der Formel (I) mit n = 1 bevorzugt in ortho-Stellung zum gezeigten Hydroxy-Rest, im Falle von Verbindungen der Formel (I) mit n = 2 befinden sich die beiden Reste R¹ bevorzugt beide in ortho-Stellung oder jeweils einer in ortho- und einer in para- Stellung zum gezeigten Hydroxy-Rest und im Falle von Verbindungen der Formel (I) mit n = 3 befinden sich zwei Reste R¹ bevorzugt in ortho-und ein Rest R¹ in para-Stellung zum gezeigten Hydroxy-Rest.

(C₁-C₁₈)-Alkyl steht bevorzugt für
- ein geradkettiges oder ab C₃ verzweigtes (C₁-C₈)-Alkyl, besonders bevorzugt ein verzweigtes (C₃-C₄)-Alkyl wie beispielsweise iso-Propyl, sec-Butyl, iso-Butyl oder tert-Butyl und ganz besonders bevorzugt tert-Butyl, oder
- (C₃-C₁₈)-Cycloalkyl, insbesondere Cyclopropyl, Cyclobutyl, Cyclopentyl, Cyclohexyl, Cycloheptyl oder Cyclooctyl, ganz besonders Cyclopropyl, Cyclopentyl und Cyclohexyl.

(C₂-C₁₈)-Alkenyl steht bevorzugt für einen geradkettigen oder verzweigten (C₂-C₆)-Alkenylrest, vorzugsweise Vinyl, Allyl, n-Prop-1-en-1-yl und n-But-2-en-1-yl.

(C₆-C₁₀)-Aryl steht bevorzugt für Phenyl, p-Tolyl, 4-Hydroxyphenyl, 1-Naphtyl, 2-Naphtyl,

(C₆-C₂₄)-Alkylaryl steht bevorzugt für Benzyl.

N(R²)₂ steht bevorzugt für Methylamino, Ethylamino, n-Propylamino, Isopropylamino, tert-Butylamino, Dimethylamino, Diethylamino, Di-n-propylamino, Diisopropylamino, Di-t-butylamino, Di-n-pentylamino, Di-n-hexylamino, Ethylmethylamino, Isopropylmethylamino, n-Butylethylamino und n-Hexyl-i-pentylamino.

(C₁-C₁₈)-Alkoxy steht bevorzugt für Methoxy, Ethoxy, n-Propoxy, Isopropoxy, tert-Butoxy, n-Pentoxy und n-Hexoxy.

(C₃-C₁₀)-Heteroaromat steht vorzugsweise für Pyridyl, Pyrimidyl, Pyridazinyl, Thienyl, Furyl, Pyrrolyl, Thiazolyl, Oxazolyl, Imidazolyl, Indolyl, Indazolyl, Benzofuranyl, Benzothiophenyl, Chinolinyl, Isochinolinyl, besonders bevorzugt Pyridyl, Pyrimidyl, Pyridazinyl, Furyl und Thiazolyl.

Bei bevorzugten Verbindungen der Formel (II) nimmt n die Werte 1 oder 2 an.

R¹ befindet sich im Falle von Verbindungen der Formel (II) mit n=1 bevorzugt in ortho-Stellung zu den gezeigten Hydroxy-Resten, im Falle von Verbindungen der Formel (II) mit n=2 befinden sich die beiden Reste R¹ vorzugsweise beide in ortho-Stellung und in para-Stellung zu den gezeigten Hydroxy-Resten.

In Verbindungen der Formel (II) steht B für eine Bindung oder eine (C₁-C₆)-Alkylen-Gruppe, bevorzugt für eine 2,2-Bindung, oder eine 4,4-Bindung, oder für eine 2,2-verknüpfende Alkylen-Gruppe, oder eine 4,4- verknüpfende Alkylen-Gruppe, besonders bevorzugt für Methylen, Ethyliden, 1,3- oder 1,2-Propyliden oder 1,2-, 1,3- oder 1,4-Butyliden.

Bevorzugte Verbindungen der Formel (I) sind
für n = 1:
2-Isopropylphenol, 2-sec-Butylphenol, 2-tert-Butylphenol, 2-Cyclohexylphenol, 2-n-Dodecylphenol, 2-Octylphenol, 2-n-Decylphenol, 2-tert-Amylphenol, 2-(1-Methylnonyl)phenol, o-Isononylphenol, o-(1-Propylpentyl)phenol, o-Hexadecylphenol, 3-tert-Butylphenol, 3-n-Pentylphenol, 3-n-Pentadecylphenol, 3-Cyclohexylphenol, 3-di-n-Butylaminophenol, 3-(Dibutylamino)phenol, 4-n-Butylphenol, 4-sec-Butylphenol, 4-tert-Butylphenol, 4-n-Pentylphenol, 4-(Pentyloxy)phenol, 4-n-(Hexyloxy)phenol, 4-n-Hexylphenol, 4-(3-Hydroxybutyl)phenol, 4-n-Undecylphenol, 4-n-Tridecylphenol, 4-n-Octadecyloxyphenol, 4-n-Hexadecyloxyphenol, p-Hexadecylphenol, 4-(4-n-Butylphenyl)phenol, 4-Cyclohexylphenol, 4-sec-Decylphenol, 4-n-Decylphenol, 4-n-Decyloxyphenol, 4-n-Dodecyloxyphenol, 4-n-Heptylphenol, 4-n-Heptyloxyphenol, Isododecylphenol, 4-(2,6-Dimethylheptyl)phenol, p-(1,1-Dimethylheptyl)phenol, 4-n-Octylphenol, 4-sec-Octylphenol, 4-tert-Octylphenol, 4-(n-Octyloxy)phenol, p-Isooctylphenol, p-(1-Ethylhexyl)phenol, 4-n-Nonylphenol, 4-n-Nonyloxyphenol, 4-Butyloxyphenol, 4-n-Butyloxyphenol, 4-[2-(Butylamino)-1-hydroxyethyl]phenol, 4-Butylaminophenol, 4-(trans-4-n-Butylcyclohexyl)phenol,
für n = 2:
2-tert-Butyl-4-methylphenol, 2-tert-Butyl-4-ethylphenol, 2-tert-Butyl-4-isopropylphenol, 2,4-di-tert-Butylphenol, 2,4-di-sec-Butylphenol, 2-sek.-Butyl-4-tert-butylphenol, 2,4-Di-tert-amylphenol, 4-tert-Butyl-2-methylphenol, 4-Isobutyl-2-isopropylphenol, 4-tert-Butyl-2-cyclopentylphenol, 2-tert-Butyl-6-methylphenol, 2,6-Di-tert-butylphenol, 2,6-Di-sec-butylphenol, 2,6-Di-isobutylphenol, 6-tert-Butyl-2-methylphenol, 6-sec-Butyl-2-cyclopentylphenol, 6-tert-Butyl-3-methylphenol, 2,5-Di-tert-Butylphenol, 2-tert-Butyl-5-methylphenol, 3,5-Di-tert-butylphenol, 3,5-Diisobutylphenol, 4-Methyl-6-tert-butylphenol, 2,4-Di-tert-pentylphenol, 4-tert-Butyl-2-cyclopentylphenol, 6-sec-Butyl-2-cyclopentylphenol, 2,4-Dipentylphenol, 5-Methyl-2-n-pentylphenol, 2-Bromo-4-(sec-butyl)phenol, 2-Bromo-4-butylphenol, 2-Bromo-4-tert-butylphenol, 4-tert-Butyl-2-phenylphenol, 4-tert-Butyl-2-chlorophenol, 4-tert-Butyl-2-fluorophenol, 2-Cyclohexyl-4-methylphenol, 2-Cyclohexyl-5-methylphenol, 2,6-Dicyclohexylphenol, 2,4-Dioctylphenol, 2,3-Dioctylphenol, 2,3-Dinonylphenol, 4-Butyl-2-nitrophenol, 4-tert-Butyl-2-nitrophenol, 2-Acetyl-4-butylaminophenol, 4-tert-Butyl-2-aminophenol, 3-Methyl-2-octylphenol, Didodecylphenol, 2-Nitro-4-tert-Butylphenol, 2-Cyclohexyl-4-nitrophenol, 2-tert-Butyl-4-methoxyphenol, 2-Isobutyl-5-methoxyphenol, 2-Amino-4-tert-Butylphenol, 2-Amino-6-nitro-4-tert-butylphenol, 2-Amino-4-sec-butylphenol, 2-Amino-4-tert-butylphenol, 2-Amino-p-tert-butylphenol, 5-Amino-2-butyl-phenol, Cyclohexyl-2-(2-phenylethyl)phenol,
für n = 3:
2,4,6-Tri-tert-butylphenol, 2,4,6 Tri-isobutylphenol, 2-tert-Butyl-4,6-dimethylphenol, 2,4-Dibutyl-6-ethylphenol, 2,4-Dimethyl-6-tert-butylphenol, 2,4-Dimethyl-6-(1'-methyl-heptadec-1'-yl)phenol, 2,6-Di-tert-butylhydroyxytoluol (BHT), 2,6-Di-tert-butyl-4-ethylphenol, 2,6-Di-tert-butyl-4-n-butylphenol, 2,6-Di-tert-butyl-4-iso-butylphenol, 2,6-Dicyclopentyl-4-methylphenol, 4-sec-Butyl-2,6-di-tert-butylphenol, 4-tert-Butyl-2,6-dimethylphenol, 4-tert-Butyl-2,6-dicyclopentylphenol, 4-tert-Butyl-2,6-diisopropylphenol, 4,6-di-tert-Butyl-2-methylphenol, 6-tert-Butyl-2,4-dimethylphenol, tert-Butyl-2,5-dimethylphenol, 2,5-Di-tert-butyl-4-methylphenol, Tri-sec-butylphenol, 2,6-Di-tert-butyl-3-methylphenol, 4,6-Di-tert-butyl-3-methylphenol, 2,4-Di-tert-butyl-5-ethylphenol, 4-Hydroxymethyl-2,6-di-tert-butylphenol, 2,6-Di-tert-butyl-4-phenylphenol, 2,6-Dioctadecyl-4-methylphenol, 2,4-Dimethyl-6-(1'-methyl-tridec-1'-yl)phenol, 2-Bromo-4,6-di(tert-butyl)phenol, 4-Bromo-2,6-di-tert-butylphenol, 2,6-Di-tert-butyl-4-chlorophenol, 2,4-Dimethyl-6-(1'-methyl-undec-1'-yl)phenol, 2,6-Di-tert-butyl-4-methoxyphenol, 2,3,4-Trinonylphenol, 2,6-Di-tert-butyl-4-nonylphenol, 2,6-Di-tert-butyl-4-octylphenol, 2,4,6-Tris-(1-methyloctyl)phenol, 2,6-Dinonyl-4-methylphenol, 2,6-Dinitro-4-nonylphenol, 2,4,6-Tricyclohexylphenol, 2,4-Di-tert-butyl-6-nitrophenol, 2,6-Di-tert-butyl-4-nitrophenol, 2-sec-Butyl-4,6-dinitrophenol, 4-tert-Butyl-2,6-dinitrophenol, 2,6-Dinitro-4-tert-butylphenol, 4,6-Dinitro-2-sec-butylphenol, 2,4,6-Trioctylphenol, 2,6-Di-tert-butyl-4-octylphenol, 2-Hexyl-4,6-dinitrophenol, 2-Isooctyl-4,6-dinitrophenol, 2,6-Di-tert-butyl-4-methoxymethylphenol, 4-tert-Butyl-2,6-dimethoxyphenol, 4-Allyl-5-(tert-butyl)-2-methoxyphenol, 2,5-Di-tert-butyl-4-methoxyphenol, N,N-Di-n-butyl-3-aminophenol, 2-Amino-4-tert-butyl-6-nitrophenol, 6-sec-Butyl-2,4-diaminophenol, 2-Amino-6-tert-butyl-4-methyl-phenol, 2-Amino-4,6-di-tert-butylphenol, 3-Amino-2,6-di-tert-butylphenol, Bis-(tert-butyl)dodecylphenol oder 4-Nonyl-2,6-bis(1-phenylethyl)phenol.

Besonders bevorzugte Verbindungen der Formel (I) sind:
2,4,6-Tri-tert-butylphenol, 2,4,6 Tri-isobutylphenol, 2-tert-Butyl-4,6-dimethylphenol, 2,4-Dibutyl-6-ethylphenol, 2,4-Dimethyl-6-tert-butylphenol, 2,6-Di-tert-butylhydroyxytoluol (BHT), 2,6-Di-tert-butyl-4-ethylphenol, 2,6-Di-tert-butyl-4-n-butylphenol, 2,6-Di-tert-butyl-4-iso-butylphenol, 2,6-Dicyclopentyl-4-methylphenol, 4-tert-Butyl-2,6-dimethylphenol, 4-tert-Butyl-2,6-dicyclopentylphenol, 4-tert-Butyl-2,6-diisopropylphenol, 4,6-Di-tert-butyl-2-methylphenol, 6-tert-Butyl-2,4-dimethylphenol, 2,6-Di-tert-butyl-3-methylphenol, 4-Hydroxymethyl-2,6-di-tert-butylphenol, 2,6-Di-tert-butyl-4-phenylphenol und 2,6-Dioctadecyl-4-methylphenol.

Eine ganz besonders bevorzugte Verbindung der Formel (I) ist 2,6-Di-tert-butylhydroxytoluol.

Besonders bevorzugte Verbindungen der Formel (II) sind
für 2,2-Verknüpfungen: 2,2'-Ethyliden-bis[4,6-di-tert.-butylphenol], 2,2'-Ethyliden-bis[6-tert.-butyl-4-isobutylphenol], 2,2'-Isobutyliden-bis[4,6-dimethylphenol], 2,2'-Methylen-bis[4,6-di-tert.-butylphenol], 2,2'-Methylen-bis[4-methyl-6-(α-methylcyclohexyl)phenol], 2,2'-Methylen-bis[4-methyl-6-cyclohexylphenol], 2,2'-Methylen-bis[4-methyl-6-nonylphenol], 2,2'-Methylen-bis[6-(α,α'-dimethylbenzyl)-4-nonylphenol], 2,2'-Methylen-bis[6-(α-methylbenzyl)-4-nonylphenol], 2,2'-Methylen-bis[6-cyclohexyl-4-methylphenol], 2,2'-Methylen-bis[6-tert.-butyl-4-ethylphenol], 2,2'-Methylen-bis[6-tert.-butyl-4-methylphenol],
für 4,4-Verknüpfungen: 4,4'-Butyliden-bis[2-tert.-butyl-5-methylphenol], 4,4'-Methylen-bis[2,6-di-tert.-butylphenol], 4,4'-Methylen-bis[6-tert.-butyl-2-methylphenol], 4,4'-Isopropylidendiphenol, 4,4'-Decylidenebisphenol, 4,4'-Dodecylidenebisphenol, 4,4'-(1-Methyloctylidene)bisphenol, 4,4'-Cyclohexylidenbis(2-methylphenol), oder 4,4'-Cyclohexylidenbisphenol.

Eine ganz besonders bevorzugte Verbindung der Formel (II) ist 2,2'-Methylen-bis[6-tert.-butyl-4-methylphenol].

Weiterhin enthält der erfindungsgemäße Biodiesel Carbodiimide.

Carbodiimide reagieren sowohl mit Säuren, beispielsweise den Spaltprodukten von Estergruppen des Biodiesels, als auch mit Wasser. In beiden Fällen können Harnstoffderivate entstehen. Die Reaktion mit den sauren Bestandteilen ist schnell, die mit Wasser sehr langsam. Es werden also sowohl vorhandene oder entstandene saure Bestandteile dauerhaft entfernt als auch im Produkt vorhandenes oder in das Produkt gelangtes Wasser.

Vorzugsweise enthält der erfindungsgemäße Biodiesel Carbodiimide der Formel (III).

R³-N=C=N-R³ (III)

Die Reste R³ können gleich oder verschieden sein. Für die Reste R³ gilt die gleiche Definition wie für die Rest R¹ einschließlich der Definition für R².

Besonders bevorzugte Carbodiimide der Formel (III) sind 1,3-Diethylcarbodiimid, 1,3-Diisopropylcarbodiimid, 1-tert-Butyl-3-ethylcarbodiimide, 1,3-Di-sec-Butylcarbodiimid, 1,3-Di-tert-Butylcarbodiimid, 1,3-Dicyclohexylcarbodiimid, 1,3-Diphenylcarbodiimid, 1,3-Di-para-tolylcarbodiimid, Bis(trimethylsilyl)carbodiimid und N,N'-Di-(2,6-diisopropylphenyl)-carbodiimid.

Ganz besonders bevorzugt ist N,N'-Di(2,6-diisopropylphenyl)-carbodiimid.

In einer weiteren Ausführungsform der vorliegenden Erfindung ist es auch möglich, eine Mischung verschiedener Carbodiimide einzusetzen.

Die Herstellung von Carbodiimiden ist hinreichend bekannt (siehe beispielsweise: Thieme Chemistry (Hrsg.): RÖMPP Online - Version 3.13. Georg Thieme Verlag KG, Stuttgart 2011). Carbodiimide sind zum Beispiel bei der Rhein Chemie Rheinau GmbH kommerziell erhältlich.

Der erfindungsgemäße Biodiesel enthält beispielsweise die Verbindungen der Formel (I) und/oder (II) in einer Gesamtmenge von 5 bis 50.000 ppm (w/w), vorzugsweise von 50 bis 12.000 ppm (w/w) und besonders bevorzugt von 100 bis 8.000 ppm (w/w).

Der erfindungsgemäße Biodiesel enthält beispielsweise die Carbodiimide, vorzugsweise solchen der Formel (III), in einer Gesamtmenge von 5 bis 50.000 ppm (w/w), vorzugsweise von 50 bis 12.000 ppm (w/w) und besonders bevorzugt von 100 bis 8.000 ppm (w/w).

In einer anderen Ausführungsform enthält der erfindungsgemäße Biodiesel die Verbindungen der Formel (I) und/oder (II) sowie die Carbodiimide, vorzugsweise solchen der Formel (III), in einer Gesamtmenge von 5 bis 50.000 ppm (w/w), vorzugsweise von 50 bis 12.000 ppm (w/w) und besonders bevorzugt von 100 bis 8.000 ppm (w/w).

Das Gewichts-Verhältnis von Carbodiimiden, vorzugsweise solchen der Formel (III), zu Verbindungen der Formel (I) und/oder (II) beträgt beispielsweise 1:99 bis 99:1, bevorzugt 1:10 bis 10:1, besonders bevorzugt 1:5 bis 5:1 und ganz besonders bevorzugt 1,5:1 bis 1:1,5

Die Erfindung betrifft weiterhin ein Verfahren zur Erhöhung der Oxidationsstabilität von Biodiesel, das sich dadurch auszeichnet, dass Biodiesel Carbodiimide und Verbindungen der Formel (I) und/oder (II), vorzugsweise in den oben genannten Mengen zugegeben wird.

Die Zugabe der Carbodiimide, vorzugsweise solchen der Formel (III), und der Verbindungen der Formel (I) und/oder (II) zum Biodiesel kann als Feststoff oder als Flüssigkeit, vorzugsweise in höherer Konzentration als sogenannter Masterbatch, zugegeben werden. Vorzugsweise werden Carbodiimide, vorzugsweise solche der Formel (III), und Verbindungen der Formel (I) und/oder (II), die bei Raumtemperatur als Feststoff vorliegen, bei einer Temperatur von 18 bis 80°C, bevorzugt bei einer Temperatur von 20 bis 35°C, im Biodiesel gelöst. Verbindungen, die bei Raumtemperatur als Flüssigkeit vorliegen können, mit oder ohne Temperaturerhöhung, durch Rühren mit dem zu stabilisierenden Biodiesel gemischt werden.

Die Erfindung betrifft weiterhin die Verwendung des erfindungsgemäßen Biodiesels als Kraftstoff insbesondere für den Betrieb von Dieselmotoren.

Weiterer Gegenstand der Erfindung ist die Verwendung einer Mischung von Verbindungen der Formel (I) und/oder (II) sowie Carbodiimiden, vorzugsweise solchen der Formel (III), zur besonders effizienten Erhöhung der Oxidationsstabilität von Biodiesel.

Weiterer Gegenstand der Erfindung ist Dieselkraftstoff enthaltend mineralischen Dieselkraftstoff, Biodiesel in einer Menge von 0,1 bis 20 Gew.-%, bevorzugt 0,5 bis 12 Gew.-%, Carbodiimide, vorzugsweise solchen der Formel (III), in einer Menge von 5 bis 50.000 ppm, bevorzugt von 50 bis 12.000 ppm und besonders bevorzugt von 100 bis 8.000 ppm, sowie Verbindungen der Formel (I) und/oder (II) in einer Menge von 5 bis 50.000 ppm, bevorzugt 50 bis 12.000 ppm und besonders bevorzugt 100 bis 8.000 ppm.

Soweit nicht anders angegeben beziehen sich angaben in ppm auf Gewichts-ppm.

Weiterhin umfasst die Erfindung ein Verfahren zur Herstellung von Dieselkraftstoff, dadurch gekennzeichnet, das mineralischer Dieselkraftstoff mit erfindungsgemäßen Biodiesel gemischt wird.

Weiterer Gegenstand der Erfindung ist ein Verfahren zur Herstellung von Dieselkraftstoff, dadurch gekennzeichnet, das mineralischer Dieselkraftstoff, Biodiesel, Carbodiimide, vorzugsweise solche der Formel (III), sowie Verbindungen der Formel (I) und/oder (II) in beliebiger Reihenfolge gemischt werden.

Weiterer Gegenstand der Erfindung ist Dieselkraftstoff enthaltend mineralischen Dieselkraftstoff sowie erfindungsgemäßen Biodiesel.

Der Erfindung liegt die überraschende Erkenntnis zugrunde, dass die kombinierte Zugabe von Verbindungen der Formel (I) und/oder (II) sowie Carbodiimiden zu Biodiesel einen, über die bekannte oxidationsstabilisierende Wirkung der Einzelsubstanzen hinausgehenden Effekt hat.

Der Vorteil der Erfindung liegt insbesondere in der erheblich verlängerten Oxidationsbeständigkeit von Biodiesel und dem erheblich reduzierten chemischen Angriff auf Werkstoffe wie Elastomere, Metalle und/oder Thermoplasten. Diese Lösung stellt ein Eingreifen am Anfang der Prozesskette dar, der den technischen Aufwand für Werkstoffe, z.B. im Automobilbereich erheblich reduziert und die Betriebssicherheit von Biodiesel deutlich erhöht.

### Beispiele

### Analytik

Die Bestimmung der nachstehend angegebenen Säurezahl erfolgte nach DIN EN 14104.

Die Bestimmung der Oxidations-Stabilität erfolgte analog zu DIN EN 14112 ("Erzeugnisse aus pflanzlichen und tierischen Fetten und Ölen - Fettsäure-Methylester (FAME) - Bestimmung der Oxidationsstabilität (beschleunigter Oxidationstest)") bei 125°C und 140°C mittels der Rancimat-Methode. Über ein Molekularsieb wird ein Luftstrom (10 l/h) bei einer Temperatur von 125°C und 140°C in die Proben eingeleitet. Die entstehenden gasförmigen Oxidationsprodukte werden in eine mit Reinstwasser gefüllte Messzelle überführt, in der mit einer Elektrode kontinuierlich die Messung der elektrischen Leitfähigkeit erfolgt. Das Ende der Induktionsperiode, also der Zeitspanne zwischen dem Beginn der Messung und der Bildung der Oxidationsprodukte, wird durch den sprunghaften Anstieg der Leitfähigkeit angezeigt. Die Zunahme der freien Ladungsträger in der Messzelle ist durch die Absorption und anschließende Dissoziation der flüchtigen Carbonsäuren im Reinstwasser zu erklären. Die Auswertung der Messkurve kann manuell über die Festlegung des Tangentenschnittpunktes bzw. automatisch über die Bestimmung des Maximums der zweiten Ableitung erfolgen. Als Oxidationsbeständigkeit wird die Länge der Induktionsperiode (Rancimat-Zeit) in Stunden angegeben.

Die Biodieselproben RME (Rapsölmethylester) sowie SME (Sojaölmethylester) waren jeweils Mischungen aus Methylestern aus gesättigten und ungesättigten C₈-C₂₄-Carbonsäuren.

Stabaxol I (CDI) ist der Markenname eines Anti-Hydrolysemittels, erhältlich zum Beispiel von der Rhein Chemie GmbH, enthaltend monomeres (N,N'-Di(2,6-diisopropylphenyl)-carbodiimid).

### Beispiel 1 - Rapsölmethylester-Stabilität bei 125°C

### Beispiel 1a: Rapsölmethylester + Wasser (zum Vergleich)

Eine frische Rapsölmethylester-Probe mit 500 ppm (w/w) Wasser zeigte bei einer Lagerung von 7 Tagen bei 125°C eine Säurezahl von 0,80 mg Kaliumhydroxid/g. Die Zunahme des Säuregehalts nach 7 Tagen Lagerung bei 125°C lag bei 0,67 mg Kaliumhydroxid/g. Die Rancimat-Zeit blieb nach 7 Tagen unverändert.

### Beispiel 1b: Rapsölmethylester + Wasser + N,N'-Di(2,6-diisopropylphenyl)-carbodiimid (zum Vergleich)

Eine frische Rapsölmethylester-Probe mit 500 ppm (w/w) Wasser, der 1.000 ppm (w/w) N,N'-Di(2,6-diisopropylphenyl)-carbodiimid zugesetzt wurde, zeigte bei einer Lagerung von 7 Tagen bei 125°C im Vergleich zu Beispiel 1 a eine deutlich reduzierte Säurezahl von 0,30 mg Kaliumhydroxid/g. Die Zunahme des Säuregehalts nach 7 Tagen Lagerung bei 125°C lag bei 0,18 mg Kaliumhydroxid/g. Die Rancimat-Zeit nahm nach 7 Tagen um 0,8 Stunden zu.

### Beispiel 1c: Rapsölmethylester + Wasser + N,N'-Di(2,6-diisopropylphenyl)-carbodiimid + 2,6-Di-tert-butylhydroxytoluol (erfindungsgemäß)

Eine frische Rapsölmethylester-Probe mit 500 ppm (w/w) Wasser der 1.000 ppm (w/w) N,N'-Di(2,6-diisopropylphenyl)-carbodiimid und 1.000 ppm (w/w) 2,6-Di-tert-butylhydroxytoluol zugesetzt wurden, zeigte bei einer Lagerung von 7 Tagen bei 125°C im Vergleich zu Beispiel 1a und 1 b noch weiter reduzierte Säurezahl von nur 0,28 mg Kaliumhydroxid/g. Die Zunahme des Säuregehalts nach 7 Tagen Lagerung bei 125°C lag bei nur bei 0,17 mg Kaliumhydroxid/g. Die Rancimat-Zeit nahm nach 7 Tagen sogar um 1,5 Stunden zu.

### Beispiel 2 - Rapsölmethylester-Stabilität bei 140°C

### Beispiel 2a: Rapsölmethylester + Wasser (zum Vergleich)

Eine frische Rapsölmethylester-Probe mit 500 ppm (w/w) Wasser zeigte bei einer Lagerung von 7 Tagen bei 140°C eine Säurezahl von 1,02 mg Kaliumhydroxid/g. Die Zunahme des Säuregehalts nach 7 Tagen Lagerung bei 140°C lag bei 0,89 mg Kaliumhydroxid/g. Die Rancimat-Zeit nahm nach 7 Tagen um 0,2 Stunden ab.

### Beispiel 2b: Rapsölmethylester + Wasser + N,N'-Di(2,6-diisopropylphenyl)-carbodiimid (zum Vergleich)

Eine frische Rapsölmethylester-Probe mit 500 ppm (w/w) Wasser und 1.000 ppm (w/w) N,N'-Di(2,6-diisopropylphenyl)-carbodiimid zeigte bei einer Lagerung von 7 Tagen bei 140°C im Vergleich zu Beispiel 2a eine reduzierte Säurezahl von 1,00 mg Kaliumhydroxid/g. Die Zunahme des Säuregehalts nach 7 Tagen Lagerung bei 140°C lag bei 0,88 mg Kaliumhydroxid/g. Die Rancimat-Zeit nahm nach 7 Tagen um 0,6 Stunden zu.

### Beispiel 2c: Rapsölmethylester + Wasser + N,N'-Di(2,6-diisopropylphenyl)-carbodiimid + 2,6-Di-tert-butylhydroxytoluol (erfindungsgemäß)

Eine frische Rapsölmethylester-Probe mit 500 ppm (w/w) Wasser der 1.000 ppm (w/w) N,N'-Di(2,6-diisopropylphenyl)-carbodiimid und 1.000 ppm (w/w) 2,6-Di-tert-butylhydroxytoluol zugesetzt wurden, zeigte bei einer Lagerung von 7 Tagen bei 140°C im Vergleich zu Beispiel 2a und 2b noch weiter reduzierte Säurezahl von 0,32 mg Kaliumhydroxid/g. Die Zunahme des Säuregehalts nach 7 Tagen Lagerung bei 140°C lag nur bei 0,21 mg Kaliumhydroxid/g. Die Rancimat-Zeit nahm nach 7 Tagen sogar um 0,9 Stunden zu.

### Beispiel 3 - Sojaölmethylester-Stabilität bei 125°C

### Beispiel 3a: Sojaölmethylester + Wasser (zum Vergleich)

Eine frische Sojaölmethylester-Probe mit 500 ppm (w/w) Wasser zeigte bei einer Lagerung von 7 Tagen bei 125°C eine Säurezahl von 1,03 mg Kaliumhydroxid/g. Die Zunahme des Säuregehalts nach 7 Tagen Lagerung bei 125°C lag bei 0,89 mg Kaliumhydroxid/g. Die Rancimat-Zeit nahm nach 7 Tagen um 0,5 Stunden ab.

### Beispiel 3b: Sojaölmethylester + Wasser + N,N'-Di(2,6-diisopropylphenyl)-carbodiimid (zum Vergleich)

Eine frische Sojaölmethylester-Probe mit 500 ppm (w/w) Wasser der 1.000 ppm (w/w) N,N'-Di(2,6-diisopropylphenyl)-carbodiimid zugesetzt wurden zeigte bei einer Lagerung von 7 Tagen bei 125°C im Vergleich zu Beispiel 3a eine reduzierte Säurezahl von 0,73 mg Kaliumhydroxid/g. Die Zunahme des Säuregehalts nach 7 Tagen Lagerung bei 125°C lag bei 0,59 mg Kaliumhydroxid/g. Die Rancimat-Zeit blieb nach 7 Tagen unverändert.

### Beispiel 3c: Sojaölmethylester + Wasser + N,N'-Di(2,6-diisopropylphenyl)-carbodiimid + 2,6-Di-tert-butylhydroxytoluol (erfindungsgemäß)

Eine frische Sojaölmethylester-Probe mit 500 ppm (w/w) Wasser der 1.000 ppm (w/w) N,N'-Di(2,6-diisopropylphenyl)-carbodiimid und 1.000 ppm (w/w) 2,6-Di-tert-butylhydroxytoluol zugesetzt wurden, zeigte bei einer Lagerung von 7 Tagen bei 125°C im Vergleich zu Beispiel 3a und 3b noch weiter reduzierte Säurezahlen von 0,33 mg Kaliumhydroxid/g. Die Zunahme des Säuregehalts nach 7 Tagen Lagerung bei 125°C lag im Vergleich zu 3a nur bei 0,20 mg Kaliumhydroxid/g. Die Rancimat-Zeit nahm nach 7 Tagen um 1,3 Stunden zu.

Die Ergebnisse der Beispiele 1 bis 3 sind in der folgenden Tabelle zusammengefasst.

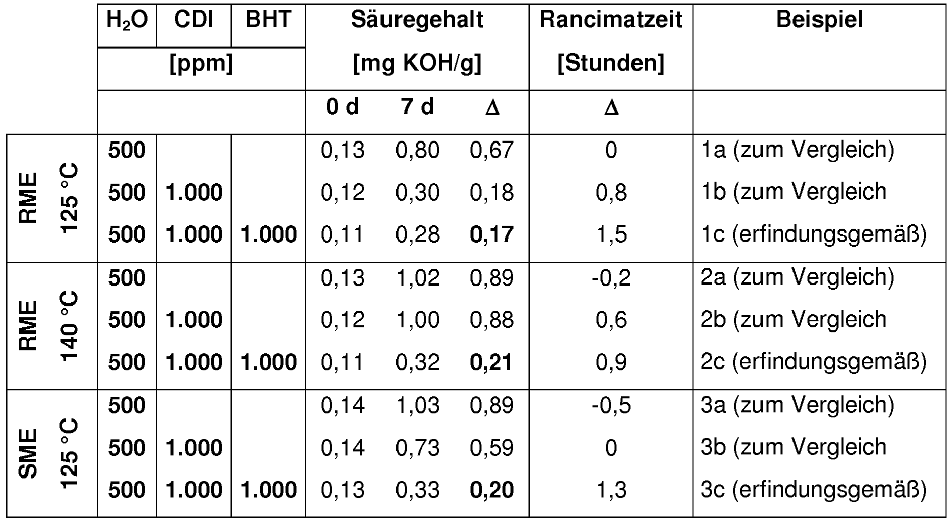

Die zugegebenen Mengen an Wasser, CDI und BHT sind in ppm angegeben. Δ = (Wert nach 7 Tagen) - (Wert nach 0 Tagen)

Es ist als außerordentlich überraschend anzusehen, dass der gefundene Säurewert mit der erfindungsgemäßen Kombination von Verbindungen der Formel (I) und/oder (II) sowie Carbodiimiden so stark verringert bzw. niedrig gehalten werden kann.

## Patentansprüche

1. Biodiesel enthaltend
(A) zumindest eine Verbindung ausgewählt aus Verbindungen der Formeln (I) und/oder (II), 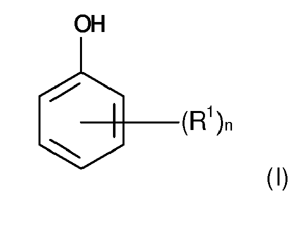 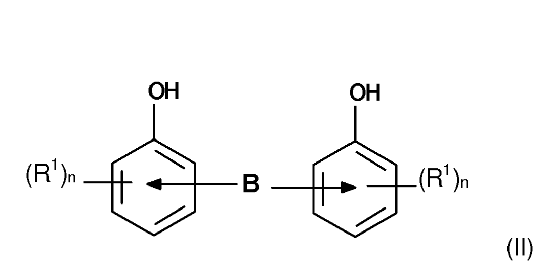 in denen n jeweils die Werte 1, 2, 3, 4 oder 5 einnehmen kann und die Reste R¹ jeweils unabhängig voneinander und von n stehen können für:
(C₁-C₁₈)-Alkyl, (C₂-C₁₈)-Alkenyl, (C₂-C₁₈)-Alkinyl, (C₆-C₁₀)-Aryl, (C₃-C₁₀)-Heteroaryl, (C₆-C₂₄)-Alkylaryl, Halogen, wie insbesondere Chlor, -NO₂, (C₁-C₁₈)-Alkoxy, -CHO, -CN, -COOR², -CON(R²)₂, H₂N-NH(R²), oder -N(R²)₂ wobei R² in den vorgenannten Formeln jeweils unabhängig für Wasserstoff oder (C₁-C₁₈)-Alkyl stehen kann und
in Formel (II)
B für eine direkte Bindung zwischen den Aryl-Kernen oder eine die Aryl-Kerne verknüpfende (C₁-C₆)Alkylen-Gruppe steht, und
(B) zumindest ein Carbodiimid.

2. Biodiesel nach Anspruch 1, **dadurch gekennzeichnet, dass** zumindest eine Verbindung ausgewählt aus Verbindungen der Formeln (I) und/oder (II), solche sind die ausgewählt sind aus
• der Gruppe von Verbindungen der Formel (I)
für n = 1:
2-Isopropylphenol, 2-sec-Butylphenol, 2-tert-Butylphenol, 2-Cyclohexylphenol, 2-n-Dodecylphenol, 2-Octylphenol, 2-n-Decylphenol, 2-tert-Amylphenol, 2-(1-Methylnonyl)phenol, o-Isononylphenol, o-(1-Propylpentyl)phenol, o-Hexadecylphenol, 3-tert-Butylphenol, 3-n-Pentylphenol, 3-n-Pentadecylphenol, 3-Cyclohexylphenol, 3-di-n-Butylaminophenol, 3-(Dibutylamino)phenol, 4-n-Butylphenol, 4-sec-Butylphenol, 4-tert-Butylphenol, 4-n-Pentylphenol, 4-(Pentyloxy)phenol, 4-n-(Hexyloxy)phenol, 4-n-Hexylphenol, 4-(3-Hydroxybutyl)phenol, 4-n-Undecylphenol, 4-n-Tridecylphenol, 4-n-Octadecyloxyphenol, 4-n-Hexadecyloxyphenol, p-Hexadecylphenol, 4-(4-n-Butylphenyl)phenol, 4-Cyclohexylphenol, 4-sec-Decylphenol, 4-n-Decylphenol, 4-n-Decyloxyphenol, 4-n-Dodecyloxyphenol, 4-n-Heptylphenol, 4-n-Heptyloxyphenol, Isododecylphenol, 4-(2,6-Dimethylheptyl)phenol, p-(1,1-Dimethylheptyl)phenol, 4-n-Octylphenol, 4-sec-Octylphenol, 4-tert-Octylphenol, 4-(n-Octyloxy)phenol, p-Isooctylphenol, p-(1-Ethylhexyl)phenol, 4-n-Nonylphenol, 4-n-Nonyloxyphenol, 4-Butyloxyphenol, 4-n-Butyloxyphenol, 4-[2-(Butylamino)-1-hydroxyethyl]phenol, 4-Butylaminophenol, 4-(trans-4-n-Butylcyclohexyl)phenol,
für n = 2:
2-tert-Butyl-4-methylphenol, 2-tert-Butyl-4-ethylphenol, 2-tert-Butyl-4-isopropylphenol, 2,4-di-tert-Butylphenol, 2,4-di-sec-Butylphenol, 2-sek.-Butyl-4-tert-butylphenol, 2,4-Di-tert-amylphenol, 4-tert-Butyl-2-methylphenol, 4-Isobutyl-2-isopropylphenol, 4-tert-Butyl-2-cyclopentylphenol, 2-tert-Butyl-6-methylphenol, 2,6-Di-tert-butylphenol, 2,6-Di-sec-butylphenol, 2,6-Di-isobutylphenol, 6-tert-Butyl-2-methylphenol, 6-sec-Butyl-2-cyclopentylphenol, 6-tert-Butyl-3-methylphenol, 2,5-Di-tert-Butylphenol, 2-tert-Butyl-5-methylphenol, 3,5-Di-tert-butylphenol, 3,5-Diisobutylphenol, 4-Methyl-6-tert-butylphenol, 2,4-Di-tert-pentylphenol, 4-tert-Butyl-2-cyclopentylphenol, 6-sec-Butyl-2-cyclopentylphenol, 2,4-Dipentylphenol, 5-Methyl-2-n-pentylphenol, 2-Bromo-4-(sec-butyl)phenol, 2-Bromo-4-butylphenol, 2-Bromo-4-tert-butylphenol, 4-tert-Butyl-2-phenylphenol, 4-tert-Butyl-2-chlorophenol, 4-tert-Butyl-2-fluorophenol, 2-Cyclohexyl-4-methylphenol, 2-Cyclohexyl-5-methylphenol, 2,6-Dicyclohexylphenol, 2,4-Dioctylphenol, 2,3-Dioctylphenol, 2,3-Dinonylphenol, 4-Butyl-2-nitrophenol, 4-tert-Butyl-2-nitrophenol, 2-Acetyl-4-butylaminophenol, 4-tert-Butyl-2-aminophenol, 3-Methyl-2-octylphenol, Didodecylphenol, 2-Nitro-4-tert-Butylphenol, 2-Cyclohexyl-4-nitrophenol, 2-tert-Butyl-4-methoxyphenol, 2-Isobutyl-5-methoxyphenol, 2-Amino-4-tert-Butylphenol, 2-Amino-6-nitro-4-tert-butylphenol, 2-Amino-4-sec-butylphenol, 2-Amino-4-tert-butylphenol, 2-Amino-p-tert-butylphenol, 5-Amino-2-butyl-phenol, Cyclohexyl-2-(2-phenylethyl)phenol,
fürn=3:
2,4,6-Tri-tert-butylphenol, 2,4,6 Tri-isobutylphenol, 2-tert-Butyl-4,6-dimethylphenol, 2,4-Dibutyl-6-ethylphenol, 2,4-Dimethyl-6-tert-butylphenol, 2,4-Dimethyl-6-(1'-methyl-heptadec-1'-yl)phenol, 2,6-Di-tert-butylhydroyxytoluol (BHT), 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 4-sec-Butyl-2,6-di-tert-butylphenol, 4-tert-Butyl-2,6-dimethylphenol, 4-tert-Butyl-2,6-dicyclopentylphenol, 4-tert-Butyl-2,6-diisopropylphenol, 4,6-di-tert-Butyl-2-methylphenol, 6-tert-Butyl-2,4-dimethylphenol, tert-Butyl-2,5-dimethylphenol, 2,5-Di-tert-butyl-4-methylphenol, Tri-sec-butylphenol, 2,6-Di-tert-butyl-3-methylphenol, 4,6-Di-tert-butyl-3-methylphenol, 2,4-Di-tert-butyl-5-ethylphenol, 4-Hydroxymethyl-2,6-di-tert-butylphenol, 2,6-Di-tert-butyl-4-phenylphenol, 2,6-Dioctadecyl-4-methylphenol, 2,4-Dimethyl-6-(1'-methyl-tridec-1'-yl)phenol, 2-Bromo-4,6-di(tert-butyl)phenol, 4-Bromo-2,6-di-tert-butylphenol, 2,6-Di-tert-butyl-4-chlorophenol, 2,4-Dimethyl-6-(1'-methyl-undec-1'-yl)phenol, 2,6-Di-tert-butyl-4-methoxyphenol, 2,3,4-Trinonylphenol, 2,6-Di-tert-butyl-4-nonylphenol, 2,6-Di-tert-butyl-4-octylphenol, 2,4,6-Tris-(1-methyloctyl)phenol, 2,6-Dinonyl-4-methylphenol, 2,6-Dinitro-4-nonylphenol, 2,4,6-Tricyclohexylphenol, 2,4-Di-tert-butyl-6-nitrophenol, 2,6-Di-tert-butyl-4-nitrophenol, 2-sec-Butyl-4,6-dinitrophenol, 4-tert-Butyl-2,6-dinitrophenol, 2,6-Dinitro-4-tert-butylphenol, 4,6-Dinitro-2-sec-butylphenol, 2,4,6-Trioctylphenol, 2,6-Di-tert-butyl-4-octylphenol, 2-Hexyl-4,6-dinitrophenol, 2-Isooctyl-4,6-dinitrophenol, 2,6-Di-tert-butyl-4-methoxymethylphenol, 4-tert-Butyl-2,6-dimethoxyphenol, 4-Allyl-5-(tert-butyl)-2-methoxyphenol, 2,5-Di-tert-butyl-4-methoxyphenol, N,N-Di-n-butyl-3-aminophenol, 2-Amino-4-tert-butyl-6-nitrophenol, 6-sec-Butyl-2,4-diaminophenol, 2-Amino-6-tert-butyl-4-methyl-phenol, 2-Amino-4,6-di-tert-butylphenol, 3-Amino-2,6-di-tert-butylphenol, Bis-(tert-butyl)dodecylphenol oder 4-Nonyl-2,6-bis(1-phenylethyl)phenol,
bevorzugt als Verbindungen der Formel (I):
2,4,6-Tri-tert-butylphenol, 2,4,6 Tri-isobutylphenol, 2-tert-Butyl-4,6-dimethylphenol, 2,4-Dibutyl-6-ethylphenol, 2,4-Dimethyl-6-tert-butylphenol, 2,6-Di-tert-butylhydroyxytoluol (BHT), 2,6-Di-tert-butyl-4-ethylphenol, 2,6-Di-tert-butyl-4-n-butylphenol, 2,6-Di-tert-butyl-4-iso-butylphenol, 2,6-Dicyclopentyl-4-methylphenol, 4-tert-Butyl-2,6-dimethylphenol, 4-tert-Butyl-2,6-dicyclopentylphenol, 4-tert-Butyl-2,6-diisopropylphenol, 4,6-Di-tert-butyl-2-methylphenol, 6-tert-Butyl-2,4-dimethylphenol, 2,6-Di-tert-butyl-3-methylphenol, 4-Hydroxymethyl-2,6-di-tert-butylphenol, 2,6-Di-tert-butyl-4-phenylphenol und 2,6-Dioctadecyl-4-methylphenol, wobei 2,6-Di-tert-butylhydroxytoluol besonders bevorzugt ist
und/oder.
• der Gruppe von Verbindungen der Formel (II)
für 2,2-Verknüpfungen: 2,2'-Ethyliden-bis[4,6-di-tert.-butylphenol], 2,2'-Ethyliden-bis[6-tert.-butyl-4-isobutylphenol], 2,2'-Isobutyliden-bis[4,6-dimethylphenol], 2,2'-Methylen-bis[4,6-di-tert.-butylphenol], 2,2'-Methylen-bis[4-methyl-6-(a-methylcyclohexyl)phenol], 2,2'-Methylen-bis[4-methyl-6-cyclohexylphenol], 2,2'-Methylen-bis[4-methyl-6-nonylphenol], 2,2'-Methylen-bis[6-(α,α'-dimethylbenzyl)-4-nonylphenol], 2,2'-Methylen-bis[6-(α-methylbenzyl)-4-nonylphenol], 2,2'-Methylen-bis[6-cyclohexyl-4-methylphenol], 2,2'-Methylen-bis[6-tert.-butyl-4-ethylphenol], 2,2'-Methylen-bis[6-tert.-butyl-4-methylphenol],
für 4,4-Verknüpfungen: 4,4'-Butyliden-bis[2-tert.-butyl-5-methylphenol], 4,4'-Methylen-bis[2,6-di-tert.-butylphenol], 4,4'-Methylen-bis[6-tert.-butyl-2-methylphenol], 4,4'-Isopropylidendiphenol, 4,4'-Decylidenebisphenol, 4,4'-Dodecylidenebisphenol, 4,4'-(1-Methyloctylidene)bisphenol, 4,4'-Cyclohexylidenbis(2-methylphenol), oder 4,4'-Cyclohexylidenbisphenol
wobei 2,2'-Methylen-bis[6-tert.-butyl-4-methylphenol] besonders bevorzugt ist.

3. Biodiesel nach Anspruch 1 oder 2, **dadurch gekennzeichnet, dass** der Biodiesel gesättigte oder ungesättigte C₈-C₂₄-Carbonsäurealkylester oder Mischungen davon, insbesondere C₈-C₂₄-Carbonsäuremethylester oder C₈-C₂₄-Carbonsäureethylester enthält.

4. Biodiesel nach einem der Ansprüche 1 bis 3, **dadurch gekennzeichnet, dass** er als Carbodiimide solche der Formel (III) enthält,
R³-N=C=N-R³ (III)
wobei für R³ die Definition für R¹ gemäß Anspruch 1 einschließlich der Definition für R² gilt, wobei
1,3-Diethylcarbodiimid, 1,3-Diisopropylcarbodiimid, 1-tert-Butyl-3-ethylcarbodiimide, 1,3-Di-sec-Butylcarbodiimid, 1,3-Di-tert-Butylcarbodiimid, 1,3-Dicyclohexylcarbodiimid, 1,3-Diphenylcarbodiimid, 1,3-Di-para-tolylcarbodiimid, Bis(trimethylsilyl)carbodiimid und N,N'-Di-(2,6-diisopropylphenyl)-carbodiimid bevorzugt sind und N,N'-Di-(2,6-diisopropylphenyl)-carbodiimid besonders bevorzugt ist.

5. Biodiesel nach einem der Ansprüche 1 bis 4, **dadurch gekennzeichnet, dass** er die Verbindungen der Formel (I) und/oder (II) in einer Gesamtmenge von 5 bis 50.000 ppm (w/w), vorzugsweise von 50 bis 12.000 ppm (w/w) und besonders bevorzugt von 100 bis 8.000 ppm (w/w) enthält.

6. Biodiesel nach einem der Ansprüche 1 bis 5, **dadurch gekennzeichnet, dass** er die Carbodiimide, vorzugsweise solchen der Formel (III), in einer Gesamtmenge von 5 bis 50.000 ppm (w/w), vorzugsweise von 50 bis 12.000 ppm (w/w) und besonders bevorzugt von 100 bis 8.000 ppm (w/w) enthält.

7. Biodiesel nach einem der Ansprüche 1 bis 4, **dadurch gekennzeichnet, dass** er die Verbindungen der Formel (I) und/oder (II) sowie die Carbodiimide, vorzugsweise solchen der Formel (III), in einer Gesamtmenge von 5 bis 50.000 ppm (w/w), vorzugsweise von 50 bis 12.000 ppm (w/w) und besonders bevorzugt von 100 bis 8.000 ppm (w/w) enthält.

8. Biodiesel nach einem der Ansprüche 1 bis 7, **dadurch gekennzeichnet, dass** das Gewichts-Verhältnis von Carbodiimide, vorzugsweise solchen der Formel (III), zu Verbindungen der Formel (I) und/oder (II) 1:99 bis 99:1, bevorzugt 1:10 bis 10:1, besonders bevorzugt 1:5 bis 5:1 und ganz besonders bevorzugt 1,5:1 bis 1:1,5 beträgt.

9. Verfahren zur Erhöhung der Oxidationsstabilität von Biodiesel, **dadurch gekennzeichnet, dass** Verbindungen der Formel (I) und/oder (II) sowie Carbodiimide, vorzugsweise solchen der Formel (III) zu dem zu stabilisierenden Biodiesel in einer Menge von 5 bis 50.000 ppm, bevorzugt von 50 bis 12.000 und besonders bevorzugt von 100 bis 8.000 ppm zugegeben wird.

10. Verwendung von
• Verbindungen der Formel (I) und/oder (II) oder Mischungen davon in Kombination mit
• Carbodiimide ,vorzugsweise solchen der Formel (III)
zur Erhöhung der Oxidationsstabilität von Biodiesel.

11. Dieselkraftstoff enthaltend Biodiesel nach einem der Ansprüche 1 bis 8.

12. Dieselkraftstoff enthaltend
• mineralischen Dieselkraftstoff,
• Biodiesel in einer Menge von 0,1 bis 20 Gew.-%, bevorzugt 0,5 bis 12 Gew.-%
• Carbodiimide, vorzugsweise solche der Formel (III) in einer Menge von 5 bis 50.000 ppm, bevorzugt 50 bis 12.000 und besonders bevorzugt 100 bis 8.000 ppm und
• Verbindungen der Formel (I) und/oder (II) in einer Menge von 5 bis 50.000 ppm, bevorzugt 50 bis 12.000 und besonders bevorzugt 100 bis 8.000 ppm.

13. Verfahren zur Herstellung von Dieselkraftstoff, **dadurch gekennzeichnet**, das mineralischer Dieselkraftstoff mit Biodiesel nach einem der Ansprüche 1 bis 8 gemischt wird.

14. Verfahren zur Herstellung von Dieselkraftstoff, **dadurch gekennzeichnet, dass** mineralischer Dieselkraftstoff, Biodiesel, Carbodiimide, vorzugsweise solche der Formel (III) und Verbindungen der Formel (I) und/oder (II) oder Mischungen davon in beliebiger Reihenfolge gemischt werden.
